(19) **Europäisches Patentamt / European Patent Office / Office européen des brevets**

(11) **EP 1 495 880 B1**

(12) **EUROPEAN PATENT SPECIFICATION**

(45) Date of publication and mention
of the grant of the patent:
**17.02.2010 Bulletin 2010/07**

(51) Int Cl.:
**B60C 9/00** (2006.01)　　**B60C 9/20** (2006.01)
**B60C 9/22** (2006.01)

(21) Application number: **03717577.5**

(22) Date of filing: **14.04.2003**

(86) International application number:
**PCT/JP2003/004715**

(87) International publication number:
**WO 2003/086782 (23.10.2003 Gazette 2003/43)**

(54) **PNEUMATIC TIRE**

LUFTREIFEN

PNEUMATIQUE

(84) Designated Contracting States:
**DE ES FR GB IT**

(30) Priority: **18.04.2002　JP 2002116174**

(43) Date of publication of application:
**12.01.2005　Bulletin 2005/02**

(73) Proprietor: **Bridgestone Corporation**
**Tokyo 104-8340 (JP)**

(72) Inventors:
 • **Yoshimi, Takuya,**
 **Bridgestone Corporation Technical　Center**
 **Kodaira-shi,**
 **Tokyo 187-8531 (JP)**

 • **Takimura, Mamoru,**
 **Bridgestone Corporation Technical Center**
 **Kodaira-shi,**
 **Tokyo 187-8531 (JP)**

(74) Representative: **Whalley, Kevin et al**
**Marks & Clerk LLP**
**90 Long Acre**
**London WC2E 9RA (GB)**

(56) References cited:
 **EP-A1- 0 749 854　　EP-A2- 0 820 882**
 **WO-A-98/47726　　JP-A- 2001 180 220**
 **JP-A- 2001 206 016　　JP-A- 2002 029 214**
 **JP-A- 2002 069 776　　JP-A- 2002 079 806**
 **JP-A- 2003 127 611**

**Description**

This invention relates to a pneumatic tire having effectively reduced rolling resistance and flat spot while maintaining tire noise, particularly road noise at low level.

In automobiles, particularly passenger cars, improvements relating to reductions of vibration, fuel consumption and pollution are continuously promoted, and hence it is strongly demanded to more reduce noise exemplified by road noise, rolling resistance and flat spot of tires as compared with those of the conventional tire.

As the most fundamentally conventional methods of reducing the road noise, there can be mentioned (1) a method of softening rubber in a tread portion of the tire, (2) a method wherein a form of a tire carcass is changed to enhance tension of a belt, and (3) a method wherein full width or both end portions of cross belt layers, cords of which layers being crossed with each other, are held by a reinforcing layer of cords extending in a circumferential direction, e.g. nylon cord coated with rubber to enhance circumferential rigidity of a belt, and a rubber coating strip of the cord is spirally wound in a widthwise direction of the tire for removing a joint portion of the reinforcing layer as disclosed in JP-A-6-24208.

However, these methods have merits and demerits together, so that they are actually applied by selecting or combining these methods in accordance with the use purpose. Particularly, the method (3) is widely known as a method of improving high-speed durability rather than reduction of road noise, and is a reinforcing structure being particularly used in existing high-performance and high-quality tires.

Namely, the method (1) can reduce the road noise through softening of the tread rubber, but largely lowers the wear resistance of the tread and also considerably deteriorates the steering stability, so that it is lacking in practical use, and the method (2) can enhance the belt tension in the tire, but is inconvenient in the basic performance of the tire that the lateral rigidity and cornering performance of the tire are lowered to contact a portion other than the tread portion with the ground, and the method (3) has somewhat an effect of reducing the road noise in addition to the improvement of the high-speed durability, but not to a satisfactory degree of the effect.

On the contrary, in a radial tire wherein "a belt reinforcing layer is arranged at an outer circumferential side of a belt layer on a whole and/or both end parts of a tread portion, and the belt reinforcing layer is formed by spirally and endlessly winding a narrow-width rubberized strip containing a plurality of fiber cords so as to arrange the cords substantially in parallel in a circumferential direction of the tire, and the cord of the belt reinforcing layer is an organic fiber cord, and further this fiber cord has an elongation of not more than 2.7% at $50\pm5°C$ under a load of 1.4 g/d and an elongation of 1.5-6.0% at $170\pm5°C$ under a load of 0.7 g/d" as disclosed in JP-A-9-66705, "the belt reinforcing layer is spirally wound at the whole of the tread portion and/or at a position near to both side end parts of the tread portion and further the modulus of the cord used in the reinforcing layer is enhanced to arrange a barrier-like reinforcing layer having a high tension in the circumferential direction of the tire, whereby the tensile rigidity of the tread portion in the circumferential direction is made larger to enhance a so-called hoop effect of the belt, so that vibrations based on large and small, uneven road surface during the running of the tire are hardly caught by the tread surface and hence vibrations transferred through side portion of the tire - a rim portion - a wheel to an interior of the vehicle body is decreased or the road noise is reduced", and also "vibrations based on the uneven road surface can be reduced by rendering the organic fiber cord in the belt reinforcing layer into an elongation of not more than 2.7% under a load of 1.4 g/d at a temperature applied to the belt reinforcing layer during the usual running of the tire or $50\pm5°C$", and further "the shapability of the tire through vulcanization is made good by rendering the fiber cord in the belt reinforcing layer into an elongation of 1.5-6.0% under a load of 0.7 g/d at a temperature applied to the cords in the vulcanization building of the tire or $170\pm5°C$ and the properties of the belt reinforcing layer become uniform and the ground contacting property also becomes uniform, so that the road noise property, steering stability and resistance to uneven wear in the tire are improved".

Therefore, such a tire can balancedly reduce the road noise and the rolling resistance as compared with the conventional tire.

However, the standard of the performances required for tires tends to become more severe every year, and it is required to more improve the road noise and the rolling resistance.

In addition to the above, it has lately become important to reduce flat spot, i.e. a deformation produced in a cooled tire when the tire heated during running is left to stand under load.

When a low-elasticity, low-loss cord such as nylon cord is used in the belt reinforcing layer for the purpose of reducing the rolling resistance under such a situation, there is a problem that it is necessary to increase the road noise and the flat spot.

Based on knowledge that it is effective to decrease the amount of the cords used in the belt reinforcing layer for reducing each of the rolling resistance and the flat spot, it is an object of the present invention to provide a pneumatic tire in which the rolling resistance and the flat spot are effectively reduced while maintaining the road noise at approximately an equal level as compared with that of the radial tire described in the above publication by particularly maintaining the cord diameter of the reinforcing cord while maintaining the modulus of elasticity in the belt reinforcing layer as a rubberized layer at approximately an equal level to that described in this publication, and it is another object of the invention to provide a pneumatic tire in which the durability of the belt reinforcing layer itself is largely improved.

Attention is also drawn to one disclosure of JP-A-2002-79806 which corresponds to one preamble of claim 1.

The pneumatic tire, particularly pneumatic radial tire according to the invention comprises a belt comprised of two or more cord layers, cords of which layers being crossed with each other, superimposed at an outer circumferential side of a crown portion of a toroidally extending carcass, and a belt reinforcing layer comprised of one or more rubberized layers of reinforcing cords extending substantially in a circumferential direction of the tire and arranged at an outer circumferential side of the belt so as to cover at least one of approximately full belt width and each side region of the belt, in which the reinforcing cord is a polyethylene-2,6-naphthalate fiber cord having a total count of not more than 2400 dtex.

In this tire, both the rolling resistance and the flat spot can be effectively reduced by decreasing the volume of the reinforcing cord while maintaining the tensile modulus of the belt reinforcing layer, i.e. tension in the circumferential direction at a level equal to that of the radial tire described in JP-A-9-66705 in order to realize the low road noise equal to that of this radial tire.

That is, the invention is based on the knowledge that when using the reinforcing cord of polyethylene-2,6-naphthalate fiber, the diameter of the reinforcing cord can be made small while maintaining low road noise equal to that of the radial tire described in the above publication and hence the tension in the circumferential direction of the belt reinforcing layer and as a result the twisting coefficient can be made large.

In another tire according to the invention, the reinforcing cord is particularly constructed with the polyethylene-2,6-naphthalate fiber cord formed by twisting two yarns each having a count of 1000-1200 dtex at a twisting coefficient of 0.35-0.45.

By making the twisting coefficient large, the low road noise at an end count of the cords of polyethylene-2,6-naphthalate fiber in the belt reinforcing layer can be made equal to that described in the above publication, and as a result, the cord volume in the tire is largely decreased to effectively reduce the rolling resistance and the flat spot.

When the twisting coefficient is less than 0.35, the lowering of the adhesion property to the coating rubber becomes remarkable, while when it exceeds 0.45, the tensile modulus lowers and it is difficult to realize the desired low road noise.

In this tire and the former tire, by arranging the total count of the polyethylene-2,6-naphthalate fiber cord to be not more than 2400 dtex, the cord volume is sufficiently decreased, whereby the reduction of the rolling resistance and the flat spot can be effectively realized. On the contrary, when the count of a unit yarn is less than 1000 dtex, it is difficult to hold the tensile modulus at a level equal to that of the cord described in JP-A-9-66705.

In these tires, it is preferable that the coating rubber for the reinforcing cord has a 100% modulus at 25°C of 2.0-4.0 MPa, more preferably 2.5-3.5 MPa, and a rebound resilience at 25°C of not less than 60%

Since the polyethylene-2,6-naphthalate fiber cord has relatively high modulus, if the modulus of the coating rubber for the cord is made low, the deformation amount of the coating rubber becomes relatively larger than the deformation amount of the cord and hence there is a fear of causing a premature heat deterioration of the coating rubber resulted from the heat generation thereof, and also there is a fear of causing cord separation directly resulted from such a difference of the deformation amount. In the invention, therefore, the modulus of the coating rubber is made relatively high to advantageously mitigate the difference of the deformation amount between the rubber and the cord, and also the rebound resilience of the coating rubber is made not less than 60% to advantageously suppress the self-heat generation of the coating rubber, whereby the thermal deterioration of the coating rubber and the separation of the cord accompanied therewith are effectively prevented to ensure sufficient improvement of the durability of the belt reinforcing layer itself.

According to the invention, the reinforcing cord coated with rubber has an elongation of 1.0-2.0%, preferably 1.3-1.7% at room temperature under a load of 1.4x9.8 mN/d, an elongation of 1.5-3.5%, preferably 2.0-3.0% at 50±5°C under a load of 1.4x9.8 mN/d, and an elongation of 1.5-3.0% at 170±5°C under a load of 0.7×9.8 mN/d.

Further, the reinforcing cord coated with rubber preferably has an elongation of 1.5-2.5%, more preferably 1.7-2.3% at room temperature under a load of 2.8x9.8 mN/d.

By making the elongation of the reinforcing cord coated with rubber at room temperature in a range of 1.0-2.0%, the operability in the tire building can be enhanced and also the biting of the reinforcing cord into the belt and the like can be prevented.

Also, low road noise during the running of the vehicle can be realized by making the elongation at 50±5°C, which is generally the heating temperature of the belt reinforcing layer during the running of the tire under loading, in a range of 1.5-3.5%.

Moreover, the reason why the load of 1.4×9.8 mN/d is a standard in both the above elongations is based on the fact that an input to the cord in the tire is about 1.4x9.8 mN/d.

In addition, the dimensional stability of the tire can be further enhanced by making the elongation at 170±5°C, which is the heating temperature of the belt reinforcing layer in the vulcanization of the tire, in a range of 1.5-3.0%.

As to such an elongation, the reason why the load of 0.7x9.8 mN/d is a standard is based on the fact that a force of enlarging the cord in the vulcanization is around 0.7x9.8 mN/d.

In such a tire, an end count of the reinforcing cords per a width of 50 mm is preferably 40-70 cords, more preferably 45-60 cords. As the end count is increased, the modulus of elasticity of the belt reinforcing layer becomes high and hence it is possible to more reduce the road noise, but the rolling resistance and the flat spot become less satisfactory. In the invention, therefore, the end count is preferably limited to 40-70 cords, whereby the effective reduction of the rolling resistance and flat spot is attained while maintaining the road noise at a low level.

Moreover, when the end count is less than 40 cords, the rigidity in the widthwise direction (modulus) is lowered to deteriorate the road noise.

The belt reinforcing layer is preferably constituted with a ribbon-shaped strip having a width narrower than an arranging width of the belt reinforcing layer, which is formed by coating one or more reinforcing cords with rubber at a gauge of 0.85-1.0 mm.

When the belt reinforcing layer is formed by a winding structure of the ribbon-shaped strip of the rubberized reinforcing cord(s) or the like, if the gauge of the coating rubber is too thin, the reinforcing cord(s) tends to be bitten into the belt in the enlarging deformation of a green tire during vulcanization, and there is a fear of causing a separation failure of the belt from the bitten portion as a nucleus in a product tire. For this end, as a result that the presence or absence of separation failure is examined by variously changing the gauge of the coating rubber, it could be confirmed that in case of using the reinforcing cord of polyethylene-2,6-naphthalate fiber, when the gauge of the coating rubber is within a range of 0.85-1.0 mm, the biting of the reinforcing cord into the belt can be advantageously suppressed.

Moreover, the reason why the gauge of 1.0 mm is an upper limit is due to the fact that when it exceeds the above value, the tire weight increases and the rolling resistance becomes high.

Preferably, the belt reinforcing layer is constructed with a structural body formed by spirally winding the narrow-width ribbon-shaped strip of the reinforcing cord(s) coated with rubber in the widthwise direction of the tire.

According to this structure, the joint part of the belt reinforcing layer extending in the circumference of the tread portion in the widthwise direction thereof can be eliminated to make the belt reinforcing layer sufficiently uniform over the full circumference, and also the function resulted from the properties of the reinforcing cord can be developed sufficiently.

The invention will be further described with reference to one accompanying drawings, wherein

FIG. 1 is a schematic cross-sectional view of a main part of an embodiment of the tire according to the invention.
FIG. 2 is the same view as in FIG. 1 illustrating another embodiment of the invention.

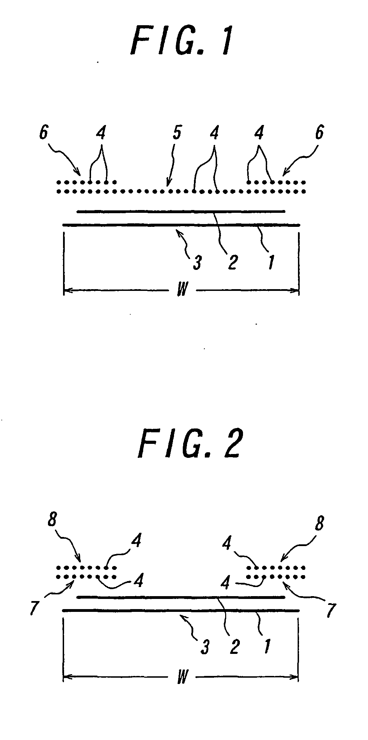

In FIG. 1, a belt 3 comprised of two belt layers 1, 2 as a cord layer, in which cords are crossed with each other between the layers and extend in opposite directions with respect to an equatorial plane of the tire, is arranged on an outer circumferential side of a crown region of a radial carcass (not shown) and extending toroidally as a whole. On an outer circumferential side of the belt 3 are successively arranged one belt reinforcing layer or so-called cap ply 5 comprised of reinforcing cords 4 extending substantially in the circumferential direction of the tire and coated with rubber, and a pair of belt reinforcing layers or so-called layer plies 6 of reinforcing cords 4 extending in the same direction. The reinforcing cord 4 in the cap ply 5 and the layer ply 6 is constituted with a cord formed by twisting two polyethylene-2,6-naphthalate fiber yarns each having a count of 1000-1200 dtex at a twisting coefficient of 0.35-0.45. Therefore, the reinforcing cord 4 has a total count of not more than 2400 dtex.

That is, the cord 4 is formed by cable-twisting two ply-twisted raw yarns together in an opposite direction in which a twisting coefficient T defined by the following equation is 0.35-0.45:

$$T = N \times (0.139 \times D/\rho)^{1/2} \times 10^{-3}$$

(wherein N: twisting number of cord (turns/10 cm), D: total decitex number of cord found, and p: specific gravity of cord).

Moreover, the production of such a fiber yarn is not particularly limited unless a production method of fibers for usual tire cord is used.

The thus constituted reinforcing cord 4 has an elongation of 1.0-2.0% at room temperature under a load of 1.4 $\times$ 9.8 mN/d, an elongation of 1.5-3.5% at 50±5°C under a load of 1.4 $\times$ 9.8 mN/d, and an elongation of 1.5-3.0% at 170±5°C under a load of 0.7 $\times$ 9.8 mN/d as a measure of modulus under rubber coating, and preferably has an elongation of 1.5-2.5% at room temperature under a load of 2.8 $\times$ 9.8 mN/d.

Also, it is preferable that an end count of the reinforcing cords 4 per a width of 50 mm is a range of 40-70 cords.

As the properties of the coating rubber for the reinforcing cord 4, it is preferable that 100% modulus at 25°C is 2.0-4.0 MPa, particularly 2.3-3.5 MPa and the rebound resilience at 25°C is not less than 60% as previously mentioned.

The cap ply 5 and the layer ply 6, each consisting of the reinforcing cords 4 coated with rubber, are preferably constituted by winding a ribbon-shaped strip containing one or more reinforcing cords 4 coated with rubber at a thickness of 0.85-1.0 mm and having a width narrower than an arranging width of each of the cap ply 5 and layer ply 6. More preferably, each of the cap ply 5 and the layer ply 6 is constituted with a spirally wound structural body of the ribbon-shaped strip.

According to the pneumatic tire having the above construction, the rolling resistance and flat spot can be advantageously reduced while effectively suppressing the occurrence of road noise as previously mentioned under the actions of the cap ply 5 and the layer ply 6.

FIG. 2 is a view similar to FIG. 1 showing another embodiment of the invention, in which layer plies 7, 8 each consisting of two plies having the same construction as the above layer ply 6 are arranged at outer peripheral sides of both side regions of the belt 3.

The latter case can bring about substantially the same function and effects as in the former case.

Although the embodiments of the invention are explained with reference to the drawings, it is possible to arrange two or more plies as only the cap ply or add the cap ply to the structure shown in FIG. 2.

As a gas filled in the pneumatic tire according to the invention, there can be used not only ordinary air but also air having changed oxygen partial pressure, an inert gas such as nitrogen or the like or a mixture thereof.

EXAMPLE

The invention will be described in detail with reference to the following examples.

However, the invention is not limited to these examples.

As the reinforcing cord used in the cap ply and the layer ply of these examples, nylon cord is 6,6-nylon made by Toray DuPont Co., Ltd. (trade name: Type 728), and polyester cord is polyethylene-2,6-naphthalate. In these examples are evaluated dtex of the cord, end count, properties of coating rubber for the reinforcing cord, and road noise, rolling resistance, flat spot and high-speed durability as a parameter of structure or the like of the belt reinforcing layer.

In all of example tires and comparative tires, a tire size is 195/65R14, and polyethylene terephthalate (PET) cords are used as a carcass cord, and the manufacture of the tire is carried out by setting vulcanization conditions to 167°C × 12 minutes, and post-cure inflation conditions to an internal pressure of 250 kPa and 23 minutes.

All of the manufactured tires have the same tubeless structure, in which the belt 3 is comprised of two steel cord belt layers 1, 2 (width of inner belt layer 1: 150 mm, width of outer belt layer 2: 140 mm), and steel cords used in the belt layers 1, 2 have $1 \times 5 \times 0.23$ structure, and the end count is 34.0 cords/5 cm, and a cord angle of the inner belt layer 1 is 22 degrees upward to the left and a cord angle of the outer belt layer 2 is 22 degrees upward to the right viewing from the front of the tire, and thus the belt 3 is a cross belt.

With respect to these tires, the road noise, rolling resistance and flat spot are evaluated by the following test methods.

Test for road noise

The tire assembled onto a rim of 6J-14 and inflated under an air pressure of 200 kPa is applied to each of four wheels of a sedan type passenger car having a displacement of 2000 cc and run on a test course for the evaluation of road noise under a load corresponding to two crewmen at a speed of 60 km/h, during which total sound pressure (decibel) over a frequency of 100-500 Hz is measured by a collecting microphone attached to a central position in a support for back of a driver's seat. The road noise is evaluated from the measured value. Test for rolling resistance

A deceleration speed is measured by inertia method when the tire is run on a rotating drum having a smooth steel face, an outer diameter of 1707.6 mm and a width larger than a maximum width of the test tire and capable of controlling a rotating speed to a constant level at a speed of 0-180 km/h under a load of 400x9.8 N, and the rolling resistance is evaluated from the measured value. Test for flat spot

After the tire is mounted onto a vehicle and actually run for a given time to sufficiently raise the temperature and left to stand until the tire is completely cooled under loading, the flat spot property is evaluated by measuring the deformation of the tire as a change of roundness. That is, the roundness is measured before and after the loading, respectively, and the difference between the measured values is detected as a flat spot amount.

High-speed durability

The tire assembled onto a rim of 6J-14 and inflated under an air pressure of 200 kPa is run at a speed of 150 km/h under a load of 520 kg for 30 minutes, and then speed is increased every 6 km/h unless trouble is not caused, and the test is stopped at a time of causing the trouble to determine a limit speed.

Moreover, as the properties of the reinforcing cord constituting the belt reinforcing layer, an elongation at $50\pm5$°C under a load of 1.4x9.8 mN/d and an elongation at $170\pm5$°C under a load of 0.7x9.8 mN/d are measured from a load-elongation curve of the rubber coated reinforcing cord according to a definition of JIS L1017 in an atmosphere temperature of a measuring condition by means of an autograph (made by Shimazu Corp.), and the measured values are made as a measure of modulus of elasticity.

Also, 100% modulus at 25°C of the coating rubber is determined by using a JIS No. 3 test specimen and measuring stress at 100% elongation thereof, and a rebound resilience of the coating rubber is determined by using a test specimen of type 1 and measuring a rebound height according to a definition of JIS K6255 through a tripso-type rebound resilience testing device.

These evaluation results are shown in Tables 1 and 2. Moreover, all numerical values of road noise, rolling resistance, flat spot and high-speed durability in Table 1 are represented by an index on the basis that the comparative tire 1 is 100, and all of them in Table 2 are represented by an index on the basis that the comparative tire 3 is 100. The larger the index value, the better the property (low road noise, low rolling resistance, low flat spot and high durability).

## Table 1

| | | | Example tire 1 | Example tire 2 | Example tire 3 |
|---|---|---|---|---|---|
| Structure of belt reinforcing layer | | | FIG. 1 | FIG. 1 | FIG. 1 |
| Reinforcing cord | Material and count of cord | | PEN 1100 dtex/2 | PEN 1100 dtex/2 | PEN 1100 dtex/2 |
| | End count (cords/50 mm) | | 50 | 58.8 | 50 |
| | Modulus of elasticity of cord | 50 ± 5°C 1.4 × 9.8 mN/d | 2.4 | 2.4 | 2.4 |
| | | 170 ± 5°C 0.7 × 9.8 mN/d | 2.2 | 2.2 | 2.2 |
| Coating rubber | 100% modulus (MPa) | | 1.8 | 1.8 | 2.5 |
| | Rebound resilience (%) | | 55 | 55 | 60 |
| Twisting coefficient | | | 0.41 | 0.41 | 0.41 |
| Road noise (index) | | | 100 | 103 | 100 |
| Rolling resistance (index) | | | 106 | 100 | 106 |
| Flat spot (index) | | | 104 | 102 | 104 |
| High-speed durability (index) | | | 102 | 105 | 110 |

| | | | Example tire 4 | Comparative tire 1 | Comparative tire 2 |
|---|---|---|---|---|---|
| Structure of belt reinforcing layer | | | FIG. 1 | FIG. 1 | FIG. 1 |
| Reinforcing cord | Material and count of cord | | PEN 1100 dtex/2 | PEN 1670 dtex/2 | 66 nylon 1400 dtex/2 |
| | End count (cords/50 mm) | | 50 | 50 | 50 |
| | Modulus of elasticity of cord | 50 ± 5°C 1.4 × 9.8 mN/d | 2.4 | 2.2 | 8.0 |
| | | 170 ± 5°C 0.7 × 9.8 mN/d | 2.2 | 2.0 | 5.0 |
| Coating rubber | 100% modulus (MPa) | | 3.0 | 1.8 | 1.8 |
| | Rebound resilience (%) | | 65 | 55 | 55 |
| Twisting coefficient | | | 0.41 | 0.49 | 0.49 |
| Road noise (index) | | | 100 | 100 | 96 |
| Rolling resistance (index) | | | 106 | 100 | 106 |
| Flat spot (index) | | | 104 | 100 | 93 |
| High-speed durability (index) | | | 112 | 100 | 102 |

### Table 2

| | | | Example tire 5 | Example tire 6 |
|---|---|---|---|---|
| Structure of belt reinforcing layer | | | FIG. 2 | FIG. 2 |
| Reinforcing cord | Material and count of cord | | PEN 1100 dtex/2 | PEN 1100 dtex/2 |
| | End count (cords/50 mm) | | 50 | 58.8 |
| | Modulus of elasticity of cord | 50 ± 5°C 1.4 × 9.8 mN/d | 2.4 | 2.4 |
| | | 170 ± 5°C 0.7 × 9.8 mN/d | 2.2 | 2.2 |
| Twisting coefficient | | | 0.41 | 0.41 |
| Road noise (index) | | | 101 | 104 |
| Rolling resistance (index) | | | 105 | 101 |
| Flat spot (index) | | | 103 | 102 |

| | | | Comparative tire 3 | Comparative tire 4 |
|---|---|---|---|---|
| Structure of belt reinforcing layer | | | FIG. 2 | FIG. 2 |
| Reinforcing cord | Material and count of cord | | PEN 1670 dtex/2 | 66 nylon 1400 dtex/2 |
| | End count (cords/50 mm) | | 50 | 50 |
| | Modulus of elasticity of cord | 50 ± 5°C 1.4 × 9.8 mN/d | 2.2 | 8.0 |
| | | 170 ± 5°C 0.7 × 9.8 mN/d | 2.0 | 5.0 |
| Twisting coefficient | | | 0.49 | 0.49 |
| Road noise (index) | | | 100 | 96 |
| Rolling resistance (index) | | | 100 | 103 |
| Flat spot (index) | | | 100 | 96 |

As seen from Tables 1 and 2, in all of the examples tires 1-6, the road noise and rolling resistance are small and the flat spot property is improved.

Also, the high-speed durability can be largely enhanced in the example tires 3 and 4 in which 100% modulus of the coating rubber is 2.5 and 3.0 MPa and the rebound resilience is 60 and 65%, respectively.

According to the invention, as seen from the above examples, when the reinforcing cord constituting the belt reinforcing layer is a cord of polyethylene-2,6-naphthalate fiber having a count of not more than 2400 dtex, the road noise, rolling resistance and flat spot can be largely reduced irrespective of the structure of the belt reinforcing layer as compared with the case of using PEN cord of 3340 dtex or nylon cord of 2800 dtex, and by specifying the elongation properties of the reinforcing cord.

Also, the high-speed durability of the tire can be largely improved by specifying the properties of the coating rubber for the reinforcing cord.

## Claims

1. A pneumatic tire comprising a belt (3) comprised of two or more cord layers (1, 2), cords of which layers being crossed with each other, superimposed at an outer circumferential side of a crown portion of a toroidally extending carcass, and a belt reinforcing layer comprised of one or more rubberized layers (5, 6) of reinforcing cords (4) extending substantially in a circumferential direction of the tire and arranged at an outer circumferential side of the belt so as to cover at least one of approximately full belt width and each side region of the belt, in which the reinforcing cord (4) is a polyethylene-2,6-naphthalate fiber cord having a total count of not more than 2400 dtex, **characterized in that** the reinforcing cord coated with rubber has an elongation of 1.0-2.0% at room temperature under a load of 1.4×9.8 mN/d, an elongation of 1.5-3.5% at 50±5°C under a load of 1.4x9.8 mN/d, and an elongation of 1.5-3.0% at 170±5°C under a load of 0.7x9.8 mN/d.

2. A pneumatic tire as claimed in claim 1, wherein the reinforcing cord is constructed with the polyethylene-2,6-naphthalate fiber cord formed by twisting two yarns each having a count of 1000-1200 dtex at a twisting coefficient of 0.35-0.45.

3. A pneumatic tire as claimed in claim 1 or 2, wherein the coating rubber for the reinforcing cord has a 100% modulus at 25°C of 2.0-4.0 MPa and a rebound resilience at 25°C of not less than 60%.

4. A pneumatic tire as claimed in any of claims 1 to 3, wherein the reinforcing cord coated with rubber has an elongation of 1.5-2.5% at room temperature under a load of 2.8x9.8 mN/d.

5. A pneumatic tire as claimed in any of claims 1 to 4, wherein an end count of the reinforcing cords per a width of 50 mm is 40-70 cords.

6. A pneumatic tire as claimed in any of claims 1 to 5, wherein the belt reinforcing layer is constituted with a ribbon-shaped strip having a width narrower than an arranging width of the belt reinforcing layer, which is formed by coating one or more reinforcing cords with rubber at a gauge of 0.85-1.0 mm.

7. A pneumatic tire as claimed in any of claims 1 to 6, wherein the belt reinforcing layer is constructed with a structural body formed by spirally winding a narrow-width ribbon-shaped strip of the reinforcing cord(s) coated with rubber in the widthwise direction of the tire.

**Patentansprüche**

1. Luftreifen umfassend einen Gürtel (3), der aus zwei oder mehreren Cordlagen (1, 2) besteht, wobei die Corde der Lagen einander überkreuzen, welche Lagen an einer Außenseite des Umfangs eines Kronenteils einer sich torusförmig erstreckenden Karkasse überlagert sind, und eine gürtelverstärkende Lage, die aus einer oder mehreren gummierten Lagen (5, 6) von Verstärkungscorden (4) besteht, die sich im Wesentlichen in einer Umfangsrichtung des Reifens erstrecken und an einer Außenseite des Gürtelumfangs so angeordnet sind, dass mindestens einer von einem etwa vollen Gürtelbreiten- und jedem Seitenbereich des Gürtels bedeckt ist, in dem der Verstärkungscord (4) ein Polyethylen-2,6-naphthalat-Fasercord ist, der eine Gesamtgarnstärke von nicht mehr als 2400 dtex aufweist, **dadurch gekennzeichnet, dass** der mit Kautschuk beschichtete Verstärkungscord eine Dehnung von 1,0 - 2,0 % bei Raumtemperatur unter einer Belastung von 1,4 x 9,8 mN/d, eine Dehnung von 1,5 - 3,5 % bei 50 ± 5 °C unter einer Belastung von 1,4 x 9,8 mN/d und eine Dehnung von 1,5 - 3,0 % bei 170 ± 5 °C unter einer Belastung von 0,7 x 9,8 mN/d aufweist.

2. Luftreifen nach Anspruch 1, wobei der Verstärkungscord mit dem Polyethylen-2,6-naphthalat-Fasercord konstruiert ist, der durch Verdrehen von zwei Garnen gebildet ist, von denen jedes eine Garnstärke von 1000 - 12000 dtex bei einem Verdrehungskoeffizienten von 0,35 - 0,45 aufweist.

3. Luftreifen nach Anspruch 1 oder 2, wobei der Beschichtungskautschuk für den Verstärkungscord ein 100 %-Modul bei 25 °C von 2,4 - 4,0 MPa und eine Rückprallelastizität bei 25 °C von nicht weniger als 60 % aufweist.

4. Luftreifen nach einem der Ansprüche 1 bis 3, wobei der mit Kautschuk beschichtete Verstärkungscord eine Dehnung von 1,5 - 2,5 % bei Raumtemperatur unter einer Belastung von 2,8 x 9,8 mN/d aufweist.

5. Luftreifen nach einem der Ansprüche 1 bis 4, wobei eine Endgarnstärke der Verstärkungscorde pro Breite von 50 mm 40 - 70 Corde beträgt.

6. Luftreifen nach einem der Ansprüche 1 bis 5, wobei die gürtelverstärkende Lage mit einem bandförmigen Streifen hergestellt ist, der eine Breite aufweist, die schmäler ist als eine Anordnungsbreite der gürtelverstärkenden Lage, die durch Beschichten einer oder mehrerer Verstärkungscorde mit Kautschuk bei einer Spur von 0,85 - 1,0 mm gebildet ist.

**7.** Luftreifen nach einem der Ansprüche 1 bis 6, wobei die gürtelverstärkende Lage mit einem strukturellen Körper konstruiert ist, der durch Spiralwickeln eines bandförmigen Streifens schmaler Breite aus Verstärkungscord(en), der/die in Breitenrichtung des Reifens mit Kautschuk beschichtet ist/sind, gebildet wird.

## Revendications

**1.** Pneumatique comprenant une ceinture (3) composée de deux couches de câblés (1, 2) ou plus, câblés dont les couches se croisent entre elles, superposées à un côté circonférentiel externe d'une partie de sommet d'une carcasse s'étendant toroïdalement, et une couche renforçant la ceinture composée d'une ou plusieurs couches caoutchoutées (5, 6) de câblés renforçants (4) s'étendant essentiellement dans une direction circonférentielle du pneu et agencées à un côté circonférentiel externe de la ceinture de façon à recouvrir au moins l'une parmi approximativement la largeur totale de la ceinture et chaque région latérale de la ceinture, dans lequel le câblé renforçant (4) est un câblé de fibre de polyéthylène-2,6-naphtalate ayant un compte total non supérieur à 2400dtex, **caractérisé en ce que** le câblé renforçant revêtu avec du caoutchouc a un allongement de 1,0 à 2,0% à température ambiante sous une charge de 1,4x9,8mN/d, un allongement de 1,5 à 3,5% à 50±5°C sous une charge de 1,4x9,8mN/d, et un allongement de 1,5 à 3,0% à 170±5°C sous une charge de 0,7x9,8mN/d.

**2.** Pneumatique selon la revendication 1, dans lequel le câblé renforçant est élaboré avec le câblé de fibre de polyéthylène-2,6-naphtalate formé en torsadant deux brins ayant chacun un compte de 1000 à 1200dtex à un coefficient de torsion de 0,35 à 0,45.

**3.** Pneumatique selon la revendication 1 ou 2, dans lequel le caoutchouc de revêtement pour le câblé renforçant a un module de 100% à 25°C de 2,0 à 4,0MPa et une résilience de rebondissement à 25°C non inférieure à 60%.

**4.** Pneumatique selon l'une quelconque des revendications 1 à 3, dans lequel le câblé renforçant revêtu avec du caoutchouc a un allongement de 1,5 à 2,5% à température ambiante sous une charge de 2,8x9,8mN/d.

**5.** Pneumatique selon l'une quelconque des revendications 1 à 4, dans lequel un compte d'extrémité des câblés renforçants par largeur de 50mm est de 40 à 70 câblés.

**6.** Pneumatique selon l'une quelconque des revendications 1 à 5, dans lequel la couche renforçant la ceinture est constituée d'une bande en forme de ruban ayant une largeur plus étroite qu'une largeur d'agencement de la couche renforçant la ceinture, qui est formée en revêtant un ou plusieurs câblés renforçants avec du caoutchouc à un calibre de 0,85 à 1,0mm.

**7.** Pneumatique selon l'une quelconque des revendications 1 à 6, dans lequel la couche renforçant la ceinture est élaborée avec un corps structural formé en enroulant en spirale une bande en forme de ruban de largeur étroite du (des) câblé(s) renforçant(s) revêtu(s) avec du caoutchouc dans le sens de la largeur du pneu.

# FIG. 1

# FIG. 2

**EP 1 495 880 B1**

## REFERENCES CITED IN THE DESCRIPTION

### Patent documents cited in the description

- JP 6024208 A
- JP 9066705 A
- JP 2002079806 A